# EUROPEAN PATENT SPECIFICATION

(11) **EP 3 345 727 B1**
(45) Date of publication and mention of the grant of the patent: **17.03.2021**
(21) Application number: 18154402.4
(22) Date of filing: 11.04.2014
(51) Int. Cl.: B25C 5/00, B25C 5/16, H02G 3/32

(54) **MULTI-MAGAZINE CLAMPING TOOL**
MULTI-MAGAZIN-SPANNWERKZEUG
OUTIL DE SERRAGE MULTI-MAGAZINE

(30) Priority: 17.04.2013 NO 20130523
(43) Date of publication of application: 11.07.2018
(62) Divisional of application: 14164413.8
(73) Proprietor: Pettersen, Thor Gunnar, 3023 Drammen (NO)
(72) Inventor: PETTERSEN, Thor Gunnar, N-3023 Drammen (NO); JOHANNESSEN, Arne Steen, N-3404 Lier (NO)
(74) Representative: Acapo AS

(56) References cited:
- EP-A1- 1 445 072
- EP-A2- 1 745 892
- JP-A- H1 148 159
- NO-B- 120 277
- US-A- 2 775 763
- US-A- 3 633 811
- US-A- 5 695 108

## Description

### The technical Field of the Invention

The present invention relates to a replaceable magazine for a set of clamps said magazine being insertable into a clamping tool for fixing electrical cables to a supporting surface by means of the clamps, where the clamps are arranged in the magazine in a row, one after the other.

### Background for the Invention

In order to fix a cable to a supporting surface, clamps of different types are used, dependent on the size of the cable, the material used in the supporting surface, and so on. Common features for such cables are firstly to penetrate the supporting surface and secondly to enclose completely or at least partly a part of the free surface of a cable.

It has previously been proposed a tool for attaching a clamp where the tool has a ramming piston that is configured to be moved back and fro in a duct, where the clamps to be applied for attaching a cable to a supporting surface, is feeded one at the time from the front end of the tool, i.e. the end intended to rest against the supporting surface, whereupon the clamp is forced into the supporting surface by striking the ramming bolt.

It has also previously known to use a hand tool with a magazine with clamps for fixing electrical cables to a supporting surface, where the tool comprises a housing containing a device for holding a magazine with stacked clamps arranged in a row. Such clamps are delivered stacked and stored in the magazine from the supplier, where the clamps are arranged in a line or row with the clamp end that is intended to enclose at least a part of the electrical cable is positioned down into a duct with a more or less U-shaped cross sectional area. The magazine, filled with clamps, is inserted into a ramming tool which is provided with a housing encompassing the magazine and comprising a ramming piston or bolt designed to move back and fro in e barrel or bore. The piston may move between two extreme positions, namely a retracted position where the piston is retracted to an inner extreme position, allowing a clamp to be inserted into the barrel or bore just in front of the piston; and another extreme position, where the piston is moved so much forward in the barrel or bore that the clamp is forced into the supporting surface. When the ramming bolt is retracted to its extreme inner extreme position and a clamp is fed into the barrel or bore, the rear end of the ramming bolt is projecting out beyond the rear end of barrel. In this position the ramming bolt may be manipulated by a ramming device, such as a hammer, in order to drive the clamp into the supporting surface. When the clamp has been driven into the supporting surface, the rear end of the ramming bolt extends preferably still out from the rear end of the barrel or bore. The ramming bolt has a length that is configured such that the rear end preferably always will project out of the barrel or bore, while the forward end being moved between two extreme positions; one where the ram is retracted backwards and a clamp is allowed to enter the barrel or bore, and a second position where the clamp is driven into the supporting surface by means of the ram.

According to this solution, the clamps are brought along an inclined path into the barrel or bore and more than one clamp are at any time arranged inside the clamping tool. This solution is completely adapted to be used for only one type of clamps, where the locking head, i.e. the part of the clamp intended to surround the cable, is in the form of two parallel fingers, arranged in a spaced relation. For this solution the ramming bolt is configured such that it is moving past all the clamps arranged within the chamber, except for the clamp thar at any time being the first claim inside the magazine A prior art replaceable magazine according to the preamble of claim 1 is disclosed in NO 120 277 B.

All these tools are tailor made for a specific type of clamps. This causes a problem in the sense that the operator or person performing the installation works must have a number of different tools, each tailor made to the different, specific type of clamps. Likewise, the clamps are designed such that they do not fit into the one and same clamping tool, except for tools based on manual feeding of clamps. On the other hand, such type of tools is inconvenient in handling due to the need of hand feeding, and that the operator all the time must pick up one and one clamp for the packaging box containing the clamps.

### Summary of the Invention

The invention is based on using the very same tool for a large variety of different types of clamps, arranged in magazines. The clamps can be fed forward in one direction, where the first clamp can be separated from the rest of the clamps, wherein said first clamp is fed in a transverse direction into a barrel or bore and where the first clamp can be forced out of the barrel or bore by means of a ramming device, whereupon a new loading sequence is taken, and the process is repeated.

An object of the invention is to provide a replaceable magazine with clamps that is particularly adapted to be inserted into a ramming tool, for fixing electrical cables to a supporting surface by means of the clamps. Another object is that one and the same magazine also is configured for storing different types of clamps without having to adapt or modify the magazine individually.

According to the present invention, the objects are achieved by a replaceable magazine as defined in the independent claim 1, while embodiments, variants, or equivalent embodiments are defined by the dependent claims.

According to the invention, it is provided a replaceable magazine for a set of clamps as referred to in claim 1.

On each side of the leg a recess can be arranged, extending along the entire length of the magazine in order to contribute to the mobility of the legs in a sideways direction.

The leg on its inner surface can be provided with one or more beads facing inwards towards the adjacent leg.

The clamps can be arrangeable aligned in the magazine with a clamp head facing upwards and clamp leg(s) pointing downwards and forward. The clamps can be arrangeable in such way in the magazine that the free end(s), i.e. the part of each clamp to be forced into the supporting surface, is pointed skewed downwards and forward.

One legged clamp can be arrangeable in the magazine with its single leg pointing skewed out of the U-shaped magazine.

For a three-legged clamp the two outer legs of the clamp can be arrangeable on the inner surface of the legs of the magazine.

The magazine can be insertable into the tool, with the bottom of the magazine facing downwards with the legs of the clamps arrangeable in the magazine facing out from the magazine while the heads of the clamps are contained inside the magazine.

Also is described a tool for fixing electrical cables to a supporting surface by means of clamps. The tool comprises a housing containing a ramming bolt which is movable in an axial direction, a replaceable magazine for storing of a set pf clamps and a loading or charging mechanism for bringing one and one clamp at the time from the magazine to a position in a barrel or bore. The ramming bolt is configured to drive and force the clamp out of the tool and into the supporting surface. Moreover, the tool comprises a mechanism configured to separate the very first clamp from the remaining clamps in the magazine. The mechanism for separating the first clamp from the second clamp in the magazine, and possibly the remaining clamps in the magazine, comprises a spring biased, movable part intended to rest against one side of a clamp head of the last clamp in the magazine and a stationary part intended to function as a stop surface for the first clamp in the magazine.

The movable part provides a force in one direction on the clamps in the magazine and presses the first clamp against the stationary part, so that leg(s) of the first clamps is or are tilted upwards while the second clamp in the magazine is locked against movement by means of a movable tailpiece, configured to move in below said upwards tilted leg(s).

Said stationary part may be provided with a surface facing the first clamp and is skewed downwards and away from the magazine and where the stationary part at its lower end is provided with a surface inclined in upwards direction and away from the magazine, said device for separate clamps being configured to apply a separating force (F) to the clamps when the ramming bolt is pulled back.

Further, it is described that the tool may comprise a loading and charging mechanism that moves the first clamp in a magazine in one direction and a device for bringing the first clamp from the magazine in a lateral or sideways direction into the barrel or bore, for subsequent driving the clamp into a supporting surface by means of the ramming bolt.

Furthermore, it is described that the loading or charging mechanism comprises a rider that creates a force in one direction on the clamps in the magazine and pressing the first clamp against a stationary surface that is configured for tilting the leg(s) of the first clamp upwards and a tailpiece that is configured to be moved under said upwards tilted leg(s) of the first clamp for locking the second clamp and the remaining clamps in the magazine against movement.

Said stationary surface may be arranged on a clamp separator, where the stationary surface is skewed downwards and away from the magazine, and where the clamp separator at its lower end is provided with a surface that is skewed upwards and away from the magazine. Said clamp separator, together with a movable rider, apply a force on the first clamp that makes the first clamp tilting up and such that the tailpiece is brought in between the first clamp and the second clamp, and applies a locking force on the second clamp and the remaining clamps in the magazine when the ramming bolt is pulled back, at the same time as the same motion of the ramming bolt backwards also secures that the tailpiece is providing the separation of the first clamp from the second clamp and also the remaining clamps.

Moreover, the loading and charging mechanism may possibly comprise a magnet arranged in such way with respect to the ramming bolt that first clamp completely or at least partly is free with respect to the ramming bolt when it is in its extreme position, ready to force a clamp into the supporting surface, such that the clamp may be brought into the barrel or bore.

Possibly the clamp separator may be configured to retain the upstream clamps in the magazine such that the first clam in front is allowed to move with respect to said remaining upstream clamps.

It is also described that the first clamp is retained in position in the barrel or bore by means of one or more magnets arranged in the wall of the barrel or bore.

In order to bring a clamp from a magazine inserted in the tool to the barrel or bore for ramming into a supporting surface, a ramming bolt may be used. The ramming bolt is movable back and fro in the barrel or bore. According to the invention a plurality of clamps are arranged in a magazine which is inserted into the tool, where one clamp at the time is transferred from the magazine to the barrel or bore. The clamps are brought to be moved forward in the magazine in parallel with the barrel or bore, whereupon a first clamp in the magazine is separated from the remaining clamps in the magazine by means of a separating device. The separated first clamp is then brought to move sideways and into the barrel or bore, in front of the ramming bolt, which in this phase is retracted completely in the barrel or bore.

The last clamp in the magazine may be exposed to a pressure by a rider that presses an edge on the first clamp against a surface on the clamp separating device, so that the first clamp may be rotated around said edge, whereupon the tailpiece is moved under the upwards tilted first clamp to come in contact with the second clamp for temporarily to hold the second clamp back, the motion of the tailpiece can be obtained by pulling the ramming bolt backwards to an extreme retracted position.

The first clamp may be brought to move laterally into the barrel or bore when the first clamp is freed off the remaining clamps, by means of a magnet arranged on an adjacent wall in the barrel or bore.

Also described is a method for bringing a clamp from a magazine in a tool to a barrel or bore for driving the clamp into a supporting surface by means of a ramming bolt that is movable back and from in the barrel or bore, wherein a plurality of clamps are arranged in the magazine inserted into the tool, and wherein one clamp at the time is brought to be moved from the magazine to the barrel or bore. A first clamp is separated from the next, second clamp in the magazine, said second clamp being locked from movement out of the magazine, while said first clamp is allowed to be transferred into a barrel or bore in order to be rammed into a supporting surface.

The clamps are brought to be moved forward in the magazine in parallel with the barrel or bore, whereupon a first clamp in the magazine is separated from the remaining clamps in the magazine by means of a separating device, whereupon the separated first clamp is brought to be moved sideways and into the barrel or bore, in front of the ramming bolt, which during this phase is completely retracted in the barrel or bore.

A last clamp in the magazine is subjected to a pressure by means of a rider that presses an edge on the first clamp against a surface on the clamp separating device so that the first clamp may rotate around said edge, whereupon a tailpiece is moved under the tilted first clamp into contact with a second clamp for temporarily to retain this second clamp back from movement, the movement of the tailpiece preferably being achieved by pulling the ramming bolt backwards in the barrel to an extreme, rearwards position.

The first clamp may be brought to a lateral movement into the barrel or bore when released from the remaining clamps by means of a magnet arranged in an adjacent wall inside the barrel or bore.

### Short Description of the Drawings

The invention shall in the following be described in further detail as well as explanatory examples, whereby only the functional elements are disclosed, but where the housing, in which the functional elements form a part, is from a clarity point of view not disclosed. One embodiment as well as explanatory examples shall be disclosed in further detail, referring to the accompanying drawings, where:
Figures 1a to 1d show non-exhaustive examples of certain different, typical clamps suitable for being arranged in a magazine according to the present invention and for introduction into a tool;
Figure 2 shows schematically, seen from one side, an example of a tool;
Figure 3 shows schematically in perspective, seen from the side, an example of a tool wherein the magazine is arranged and prior to starting the process of bringing a clamp into position in the barrel or bore;
Figure 4 shows schematically a side view of the solution shown in Figure 3, also seen from the side where the magazine is arranged, the Figure showing a starting point in the process of separating the first clamp from the remaining clamps;
Figure 5 shows schematically the same side view of the tool, seen from the same side as shown on Figure 4, where the ramming bolt and the tailpiece are retracted approximately halfway towards the magazine;
Figure 6 shows the same side view as shown in the Figures above, where the tailpiece (and the ramming bolt) are in their second extreme position, extreme to the left in the drawing, and where the first clamp is separated from the remaining, subsequent clamps in the magazine;
Figure 7 shows schematically the stage in the process where the first clamp is separated and released from the remaining clamps and is in the process of being transferred in sideways direction into the barrel or bore;
Figure 8 shows schematically a view seen from above of parts of the tool, where the first clamp is in position, ready for being forced into the supporting surface;
Figures 9 and 10 show schematically a view seen from above and from the side of the tool, respectively, where the first clamp is in its outer position in the barrel or bore, ready for being forced into the supporting surface; the tailpiece being in the process of returning back to its extreme, second position, making it ready for a new separation of a new, first clamp;
Figure 11 shows schematically a view in perspective of the second side of the ramming mechanism; and
Figure 12 shows schematically a view in perspective of a magazine according to the present invention for storing clamps of the type as shown in the Figures 1a to 1e.

### Detailed Description of the Drawings

In the following description certain embodiments of the present invention are described without implying any restriction or limitations to the invention, the scope of protection being governed by the wordings of the appended claims as interpreted by the person skilled in the art. Furthermore, explanatory examples are disclosed.

In this detailed description, the housing enclosing and surrounding the respective tool mechanisms is not shown for the purpose of clarity and simplicity. Moreover, several details of minor importance or relevance are also omitted. Further, the same reference numbers are use in the different Figures for the same or similar elements or features. Although only clamps with one leg are shown, the clamps may also have three legs.

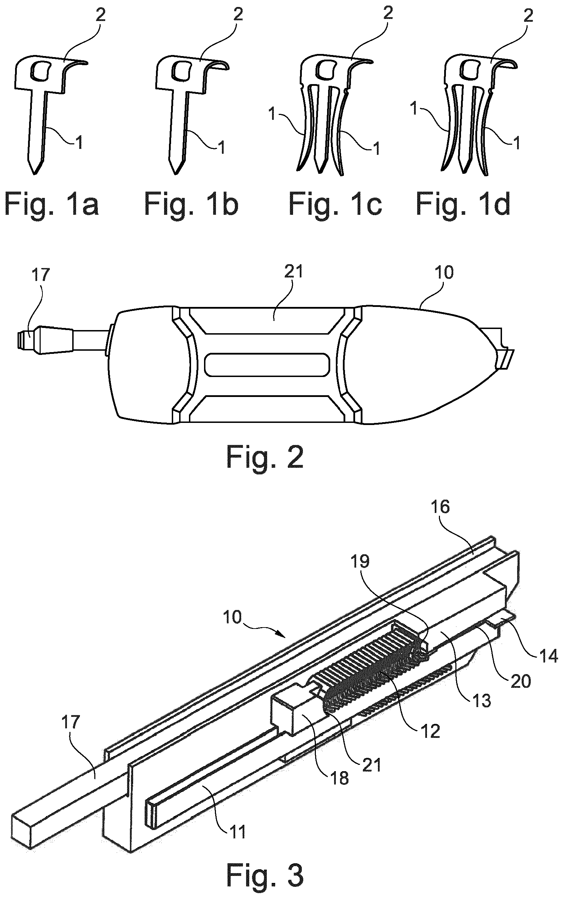

Figures 1a to 1d show some of the typical clamps that are suitable to be used in the magazine according to the present invention and for insertion into a tool. The tool is not limited for application of the clamps shown, since also other corresponding or similar types of clamps may be used. The clamps shown in the Figures 1a and 1b are of the so-called TP-clamps, equipped with one leg 1 and one head 2, the head 2 being intended to partly surround an electrical cable or line (not shown), where the head cooperate with a purpose shaped end of the ramming bolt. Figures 1c and 1d shows two different variants of clamps for gypsum plates, comprising three legs 1 and a head 2 with a hole corresponding to the ones associated with the TP-clamps. Even though the clamps shown in Figures 1a to 1d are shown having a hole, it should be appreciated that the solution according to the present invention will function in an appropriate manner also for clamps without such holes. Moreover, it should be appreciated that clamps with a different number of legs also may be used in connection with the invention.

Figure 2 shows schematically, seen from one side, an example of a tool 10 which can be used with a replaceable magazine according to the present invention. As shown the tool 10 comprises a housing 21 which encapsulates a replaceable magazine 11 containing clamps 12 for attachment to a supporting surface; ramming bolt 17; and the required mechanisms necessary for bringing one clamps from the magazine 11 to appropriate position in a barrel or bore 16, in front of the ramming tool 17. Both the function and construction of these various parts will be described below in connection with the accompanying figures. Essential parts of the mechanisms inside the housing 21 will be shown and described in connection with the accompanying drawings.

Figure 3 shows schematically in perspective an example for a suitable tool 10, seen from the side of the tool 10 with the housing removed, where a magazine 11 is arranged in a parallel position with and sideways displaced in respect of a barrel or bore, and a ramming bolt. From a functional point of view, the tool 10 comprises a magazine 11 (shown schematically) containing a number of clamps 12 arranged in a row, one in front of the others with the head 2 arranged at the top and with legs 1 pointing skewed downwards and forward, a clamp separating device 13, a tailpiece 14, a device 15 for moving the first clamp from the clamp separating device 13 into a barrel or bore 18 and a ramming bolt 17 that may be moved back and fro inside the barrel or bore 16, intended to for forcing the clamp 12 into a supporting surface /not shown). For clarity both the housing giving the tool the outer shape and other structural elements or parts of constructional elements are omitted, both in this Figure and in the following Figures, including the upper wall of the barrel or bore 16 and parts of the walls in the magazine 11. In this connection it should be appreciated that the clamps 12 during their movement through the tool 10 are running in guides (not shown) that prevent the clamps from falling out, but move according to the intended use.

As shown in the Figure the clamps 12 are arranged in the magazine 11 and in the tool 10 such that the free ends of the legs, i.e. the parts of the clamps intended to be forced into the supporting surface, are pointing skewed downwards and forward in respect of the tool 10 (towards the right in the Figures).

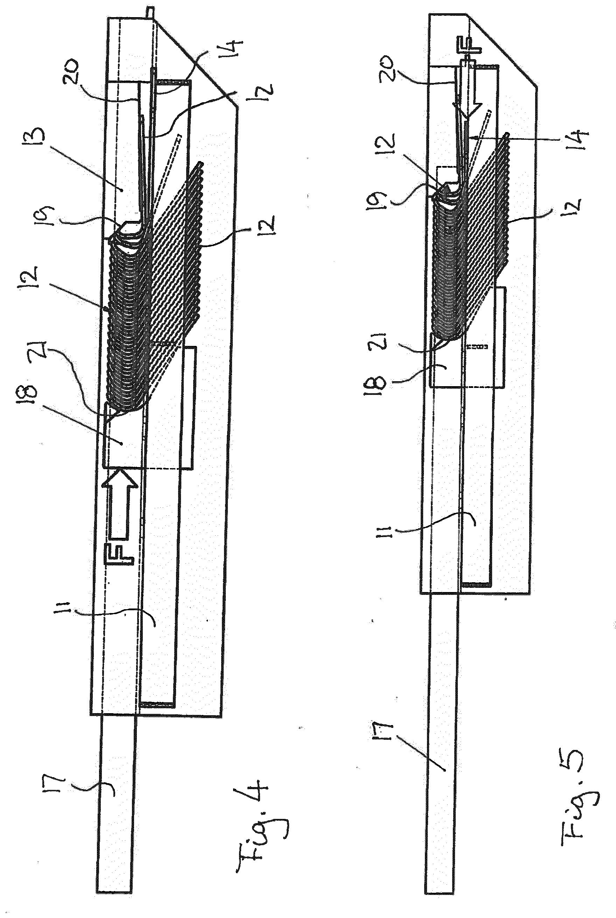

The clamps 12 are stored more or less in a compressed state between a rider 18 and the clamp separating device 19, while the walls of the magazine 11 secures that the clamps remain in correct sideways position in the row, one after the other. As shown in in the Figures the rider 18, which is movable back and fro along the inserted magazine 11 at the end facing the clamps 12, is provided with a concave or curved surface 21 adapted to the shape of the rear clamp 12 in the magazine 11 when the magazine is inserted into the tool 10. Likewise, the clamp dividing device 13 at the end facing the clamps 12, is provided with a supporting surface 19 configured to rest against an edge on the first clamp 12'. According to the example shown this resting or supporting surface 19 is inclined upwards and backwards from said edge on the first clamp 12' (upwards towards left in the Figure). Moreover, the clamp separating device 13 has at its lower side a surface 20 that is inclined upwards and forward from the end facing the first clamp 12' (upwards towards right in the Figure). A tailpiece 14 that may be moved back and fro under the clamp separating device, contributes also to the separation of the first clamp 12' from the remaining clamps 12 by moving backwards towards the magazine 11 and the other clamps 12, below the first clamp 12' and over the leg(s) of the clamp number two. The motion of the tailpiece 12 in direction towards the second clamp 12 is obtained by pulling the ramming bolt 17 backwards, i.e. towards left in the Figure. Such retraction of the ramming bolt 17 introduces a force in the tailpiece 14 in a direction of the arrow marked F in Figure 4. As shown in Figure 3, both the ramming bolt 17 and the tailpiece in its one extreme postion, extreme to the left in the Figure, prompt for starting operation of bringing one first clamp 12' into the barrel or bore 16.

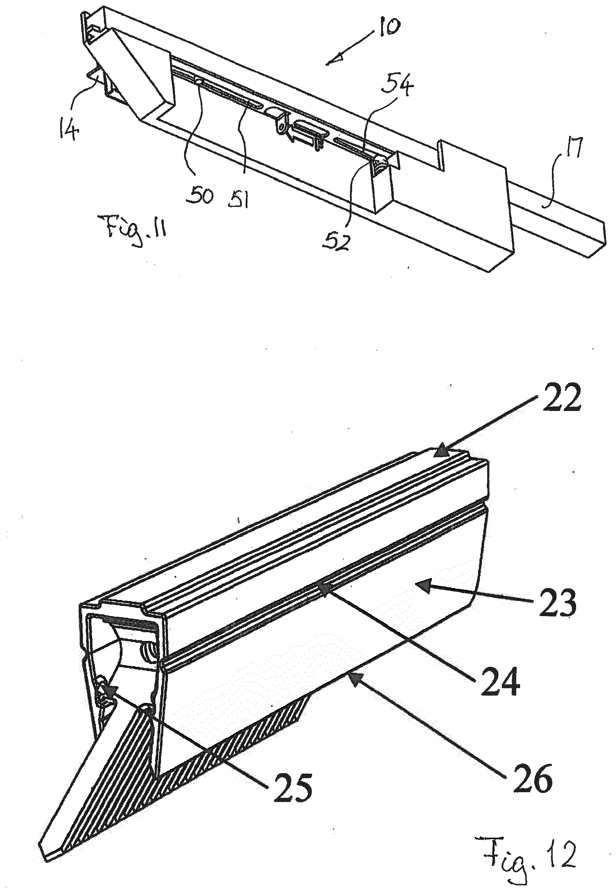

In the following, it is referred also to Figure 11. In its starting position the tailpiece 14 is kept in its forward position, i.e. to the right in the Figures 2 to 10 by means of a force, for example created by a spring (not shown) which on the one side is attached to the tailpiece 14 and on the other side to the forward end of the tool 10 (to the right in the Figures). On the lower side of the ramming bolt 17 a pin 50 may be arranged, projecting down from the ramming bolt 17. This pin projects downwards into a forward stadion hole 51 in the tailpiece 14. When the ramming bolt 17 is retracted a certain distance backwards, i.e. towards left in Figures 1 to 10, the pin 50 in the ramming tool 17 meets the forward end of the stadion hole 51 in the tailpiece. By pulling the ramming tool 17 further backwards, the ramming tool 17 will create a force that exceeds the force holding back the tailpiece, thus resulting in that the tailpiece 14 will follow the movement of the ramming bolt 17 and thus producing a stored retracting force F in the spring. When the ramming bolt 17 and the tailpiece 14 is in their extreme back position, a ball 52 which is pressed upwards with a force, for example by means of a spring (not shown), moves up into a rear stadion hole 54 in the tailpiece 14 locking the tailpiece. The resultant force on the ball 52 is larger than the force from the spring acting on the forward end of the tailpiece, so that the tailpiece 14 is retained in its rear position, in spite of said fore spring force F. The opening (not shown) in the side wall of the bore facing the magazine 11 will then be open and the first clamp 12', which is separated from the remaining clamps 12, is allowed to move into the bore. Even though the ramming bolt 17 is moved forward, i.e. towards the right in the Figures, the tailpiece 14 remains still in its rear position, and accordingly hold all the remaining clamps 12 back in the magazine 11. When the end of the ramming bolt 17 and consequently the first clamp 12' has move past the side opening in the bore, the pin 50 on the ramming tool hits the forward edge of the front stadion hole 51 in the tailpiece 51 on the tailpiece 1 and pushes the tailpiece 14 forward, i.e. towards the right in the Figure, such that the ball 53 jumps out of the rear stadion hole 54 in the tailpiece 14. The stored spring force F acting on the forward edge of the tailpiece will now be the only force acting on the tailpiece 17, so that the tailpiece 17 now is returned back to its starting point.

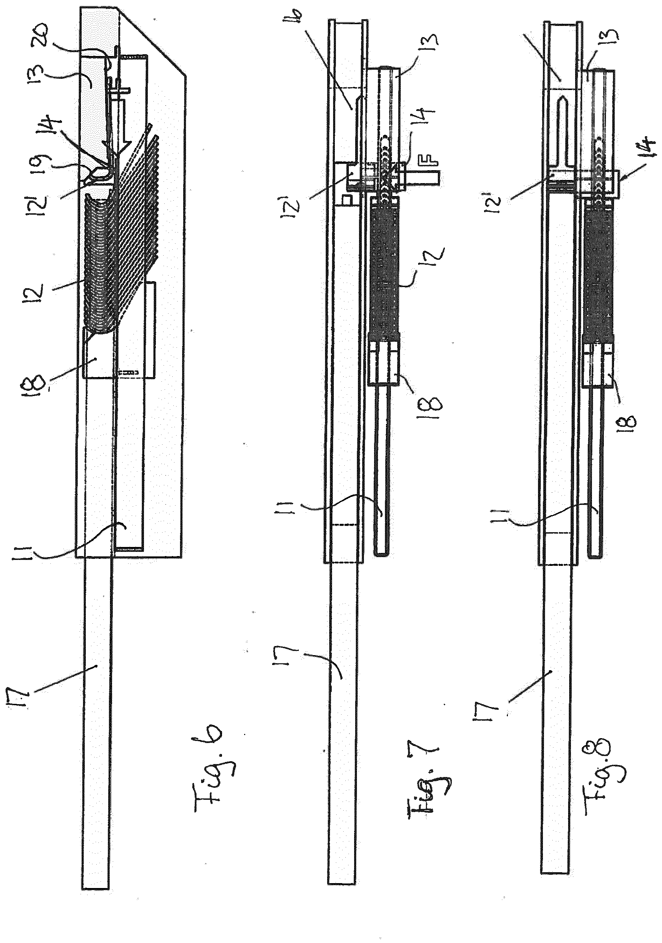

Figure 4 shows schematically a side view of the tool 10 shown in Figure 3, also seen from the side where the magazine is positioned, where Figure 4 also shows the starting point in the process of separating the first clamp from the remaining clamps 12. Due of the shape of the clamp separating device13, the contact surface and the force applied to the clamps 12 in the magazine by the rider 18, ref. the arrow F in Figure 4, the first clamp 12' will be pressed against the inclined surface 19 in the clamp separating device 13. The force F, acting on the rider 18, is produced by a spring (not shown) that extends between the movable rider 18 on the one side and the rear end of the housing, so that when a filled up magazine 11 is inserted into the tool 10, the spring will be compressed and thus produce the required force F on the rider 18. The result is that the leg or legs 1 on the first clamp 12' will be tilted upwards into contact with the lower surface 20 on the clamp separating device 13, so that the tailpiece 14, which is subjected to a force F in a direction towards the second clamp 12. Reference is here given to Figures 5 and 6. Hence the second clamp 12 is locked against movement and the first clamp 12' will be completely freed from the remaining clamps 12 in the magazine 11, so that the first clamp 12' now can be moved into the barrel bore 16.

Figure 6 shows the same view as shown in the Figures above. Here, the ramming bolt 17 and consequently the tailpiece 14 in its other extreme position, entirely to the left in the drawing, As shown in the Figure the first clamp 12' is now separated from the remaining, consecutive clamps 12 in the magazine 11, the force from the tailpiece 14, forcing these backwards and holding them in locked position. In this way it is only one clamp at the time, the first clamp 12', that is allowed to be brought further into the barrel or bore, which now is open and accessible, since the ramming bolt 17 is retracted to its extreme inner position in the barrel or bore 16. As shown in the Figure the head edge of the first clamp 12' rests against the skewed surface 19 on the clamp separating device 13, while the opposite surface of the head rests against the lower edge of the clamp separating device 13. Hence, the first clamp 12' is tilted up towards the skewed surface 20 below the clamp separating device 13.

Figure 7 shows schematically a view of parts of the tool 10, seen from above, where the first clamp 12' is about to be transferred from the clamp separating device 13 and into the bore 16. As shown, the first clamp 12' is freed from the remaining clamps 12 and is exposed to a force F in transverse or sideways direction, so that the first clamp 12' may be transferred into the barrel or bore 16. This sideways acting force F may for example be provided by one or more magnets (not shown) arranged on opposite wall in the barrel or bore 16. As also indicated in Figure 6, both the tailpiece 14 and the ramming bolt 17 are retracted to their one extreme position, so that free access is provided for the first clamp into the barrel or bore in a position in front of the ramming bolt 17. The tailpiece 14 applies in this position still a force on the second and the remaining clamps 12, so that these thus are prevented from movement into the barrel or bore 16 and in this way causes jamming of two or more clamps 12 in the barrel or bore 16.

In order to maintain the first clamp 12' in required position in the barrel or bore 16, the bottom surface in the barrel or bore, i.e. the surface on which the clamp 12' resting, may be provided with one or more small magnet (not shown), holding the first clamp 12' in the shown position.

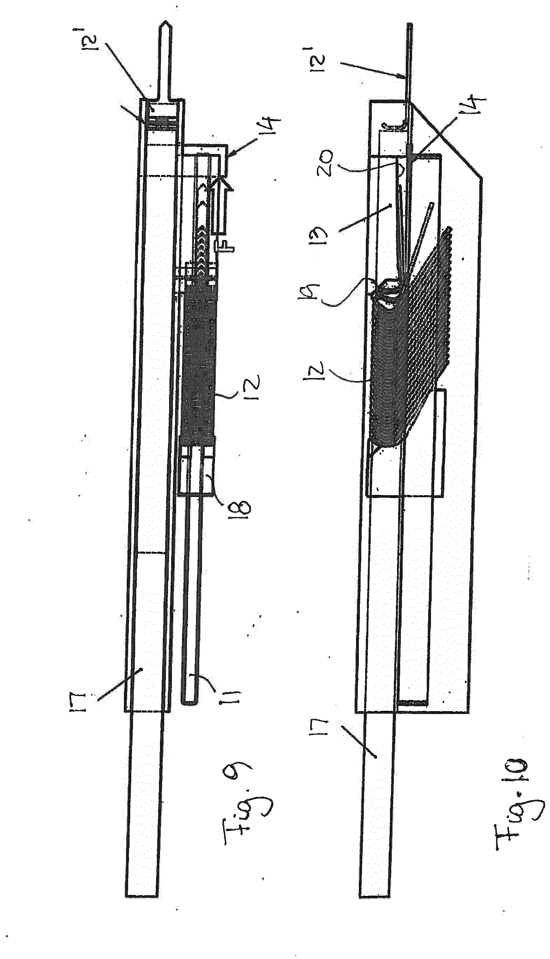

Figure 8 shows schematically a view seen from above of parts of the tool 10, where the first clamp 12' is in position in the barrel or bore, ready for being forced into the supporting surface. By ramming the free end of the ramming bolt 17, for example by means of a hammer (not shown), the ramming bolt will move forward in the barrel or bore 17. When the front of the ramming bolt has moved past the opening of the clamp separating device 13, the tailpiece 14 will be subjected to a force F (ref. Figure 9) moving the tailpiece 14 back to its starting position, ref. Figure 2 or Figure 10.

Figures 9 and 10 show schematically a view seen from above and from the side of the tool respectively, where the first clamp is in its outmost position in the barrel or bore, about to be rammed into the supporting surface, the tailpiece being subjected to a force F moving the tailpiece 14 back to its extreme second position, ready for a new separation of the a new first clamp.

Figure 12 shows schematically a cross section and a view respectively of a suitable embodiment of a magazine 11 according to the present invention configured to contain for example clamps, for example of the types of clamps 12, shown in Figures 1a to 1d.

The magazine 11 shown has a more or less U-shape with a top 22 and two from the top outwards projecting legs 23. In the area for the transition between said legs 23 and the top 22, a recess 24 is arranged on each side, extending along the entire length of the magazine 11. Said recesses 24 contribute to a more sideways movability of the legs 23 during insertion of new clamps 12 into the magazine 11. Moreover, the legs 23 are on their inner surface provided with one or more beads 25 facing inwards towards each other. The purpose of the beads 24 is to contribute to retaining the loaded clamps 12 in the magazine. If the clamps are provided with only one leg 1 the clamps will be arranged with their legs pointed skewed out of the U-shaped magazine. If the clamps 12 are provided with three legs the two outer legs will be arranged inside the legs 23 on the magazine 11. When the magazine is inserted in the tool, the bottom 26 of the magazine 11 will face downwards with the legs 1 of the clamps 12 facing outwards from the magazine 11, while the clamp heads 2 will be positioned inside the magazine. When the magazine 11 is free of the tool 10, the magazine legs 23 will press against the heads 2 of the clamps 12, keeping the clamps in a locked position. When the magazine 11 is inserted into a tool, and the tool is closed, the legs 23 of the magazine is pressed outwards and the clamps 12 will be freed from the magazine.

## Claims

1. A replaceable magazine (11) for a set of clamps (12) said magazine being insertable into a clamping tool (10) for fixing electrical cables to a supporting surface by means of the clamps, where the clamps (12) are arranged in the magazine (11) in a row, one after the other, **characterized in that** a cross sectional shape of the magazine (11) has a more or less U-shape with a top (22) and two legs (23), the legs (23) extending along the entire length of the magazine, whereby the clamps (12) are lockable inside the magazine through the legs (23) pressing against the clamps (12) head (2) when the magazine is free from the tool and the clamps are freeable from the magazine (11) by pressing the legs (23) sideways outwards when the magazine is inserted in the tool.

2. Magazine (11) according to claim 1, wherein at each side of the leg (23) a recess (24) is arranged, extending along the entire length of the magazine (11) in order to contribute to the mobility of the legs (23) in a sideways direction.

3. Magazine (11) according to claim 1 or 2, wherein the leg (23) on its inner surface is provided with one or more beads (25) facing inwards towards the adjacent leg.

4. Magazine (11) according to one of the claims 1 to 3, wherein the clamps (12) are arrangeable aligned in the magazine with a clamp head (2) facing upwards and clamp leg(s) (1) pointing downwards and forward.

6. Magazine (11) according to one of the claims 1 to 5, wherein the clamps (12) are arrangeable in such way in the magazine (11) that the free end(s), i.e. the part of each clamp (12) to be forced into the supporting surface, is pointed skewed downwards and forward.

7. Magazine (11) according to one of the claims 1 to 6, wherein a one legged clamp (12) is arrangeable in the magazine with its single leg pointing skewed out of the U-shaped magazine.

8. Magazine (11) according to one of the claims 1 to 7, wherein for a three-legged clamp (1) the two outer legs of the clamp are arrangeable on the inner surface of the legs (23) of the magazine.

9. Magazine (11) according to one of the claim 4 , wherein the magazine (11) is insertable into the tool (10), with the bottom (26) of the magazine (11) facing downwards with the legs (1) of the clamps (12) arrangeable in the magazine (11) facing out from the magazine (11) while the heads (2) of the clamps are contained inside the magazine (11).

## Patentansprüche

1. Auswechselbares Magazin (11) für einen Satz von Klemmen (12), wobei das Magazin in ein Klemmwerkzeug (10) zum Befestigen von elektrischen Kabeln an einer Stützfläche mittels der Klemmen eingesetzt werden kann, wobei die Klemmen (12) in dem Magazin (11) in einer Reihe angeordnet sind, **dadurch gekennzeichnet, dass** eine Querschnittsform des Magazins (11) eine mehr oder weniger U-Form mit einem Oberteil (22) und zwei Schenkeln (23) aufweist, wobei sich die Schenkel (23) über die gesamte Länge des Magazins erstrecken, wobei die Klemmen (12) mittels der Schenkel (23), die gegen einen Kopf (2) der Klemmen (12) drücken, innerhalb des Magazins verriegelt werden können, wenn das Magazin frei von dem Werkzeug ist, und wobei die Klemmen durch Drücken der Schenkel (23) seitlich nach außen von dem Magazin (11) freigegeben werden können, wenn das Magazin in das Werkzeug eingesetzt ist.

2. Magazin (11) nach Anspruch 1, wobei an jeder Seite des Schenkels (23) eine Vertiefung (24) angeordnet ist, die sich über die gesamte Länge des Magazins (11) erstreckt, um zur Beweglichkeit der Schenkel (23) in einer seitlichen Richtung beizutragen.

3. Magazin (11) nach Anspruch 1 oder 2, wobei der Schenkel (23) an seiner Innenfläche mit einer oder mehreren Sicken (25) versehen ist, die nach innen zu dem benachbarten Schenkel weisen.

4. Magazin (11) nach einem der Ansprüche 1 bis 3, wobei die Klemmen (12) mit einem nach oben weisenden Klemmenkopf (2) sowie nach unten und vorne weisenden Klemmenschenkel(n) (1) ausgerichtet im Magazin angeordnet werden können.

6. Magazin (11) nach einem der Ansprüche 1 bis 5, wobei die Klemmen (12) derart in dem Magazin (11) angeordnet werden können, dass das/die freie/-n Ende/- n, d. h. der in die Stützfläche zu drückende Teil jeder Klemme (12), schräg nach unten und vorne gerichtet ist.

7. Magazin (11) nach einem der Ansprüche 1 bis 6, wobei eine einschenklige Klemme (12) mit ihrem einzelnen Schenkel schräg aus dem U-förmigen Magazin herausweisend in dem Magazin angeordnet werden kann.

8. Magazin (11) nach einem der Ansprüche 1 bis 7, wobei bei einer dreischenkligen Klemme (1) die beiden äußeren Schenkel der Klemme an der Innenfläche der Schenkel (23) des Magazins angeordnet werden können.

9. Magazin (11) nach einem des Anspruchs 4, wobei das Magazin (11) mit dem Boden (26) des Magazins (11) nach unten weisend in das Werkzeug (10) eingesetzt werden kann, wobei die Schenkel (1) der Klemmen (12), die in dem Magazin (11) angeordnet werden können, aus dem Magazin (11) heraus weisen, während die Köpfe (2) der Klemmen im Inneren des Magazins (11) aufgenommen sind.

## Revendications

1. Chargeur remplaçable (11) pour un ensemble de pinces (12), ledit chargeur pouvant être inséré à l'intérieur d'un outil de serrage (10) pour fixer des câbles électriques sur une surface de support par l'intermédiaire des pinces, dans lequel les pinces (12) sont agencées dans le chargeur (11) dans une rangée, l'une derrière l'autre, **caractérisé en ce qu'**une forme de section transversale du chargeur (11) a une forme plus ou moins en U, avec une partie supérieure (22) et deux branches (23), les branches (23) s'étendant le long de l'ensemble de la longueur du chargeur, les pinces (12) pouvant ainsi être verrouillées à l'intérieur du chargeur par suite de la pression exercée par les branches (23) contre la tête (2) des pinces (12) lorsque le chargeur est dégagé de l'outil, les pinces pouvant être libérées du chargeur (11) en pressant les branches (23) latéralement vers l'extérieur lorsque le chargeur est inséré dans l'outil.

2. Chargeur (11) selon la revendication 1, dans lequel un évidement (24) est agencé au niveau de chaque côté de la branche (23), s'étendant le long de l'ensemble de la longueur du chargeur (11) pour contribuer à la mobilité des branches (23) dans une direction latérale.

3. Chargeur (11) selon les revendications 1 ou 2, dans lequel la branche (23) comporte sur sa surface interne un ou plusieurs bourrelets (25) orientés vers l'intérieur, vers la branche adjacente.

4. Chargeur (11) selon l'une des revendications 1 à 3, dans lequel les pinces (12) peuvent être agencées de sorte à être alignées dans le chargeur avec une tête de la pince (2) orientée vers le haut, la (les) branche(s) de la pince (1) étant dirigée(s) vers le bas et vers l'avant.

6. Chargeur (11) selon l'une des revendications 1 à 5, dans lequel les pinces (12) peuvent être agencées dans le chargeur (11) de sorte que l'extrémité (les extrémités) libre(s), c'est-à-dire la partie de chaque pince (12) devant être forcée dans la surface de support, est (sont) dirigée(s) de manière inclinée vers le bas et vers l'avant.

7. Chargeur (11) selon l'une des revendications 1 à 6, dans lequel une pince à une branche (12) peut être agencée dans le chargeur de sorte que sa seule branche est dirigée de maniée inclinée hors du chargeur en forme de U.

8. Chargeur (11) selon l'une des revendications 1 à 7, dans lequel, pour une pince à trois branches (1) les deux branches externes de la pince peuvent être agencées sur la surface interne des branches (23) du chargeur.

9. Chargeur (11) selon la revendication 4, dans lequel le chargeur (11) peut être inséré à l'intérieur de l'outil (10) de sorte que la partie inférieure (26) du chargeur (11) est orientée vers le bas, les branches (1) des pinces (12) pouvant être agencées dans le chargeur (11) de sorte à être orientées hors du chargeur (11), les têtes (2) des pinces étant contenues à l'intérieur du chargeur (11).
